# EUROPÄISCHE PATENTSCHRIFT

(11) **EP 1 566 089 B1**
(45) Veröffentlichungstag und Bekanntmachung des Hinweises auf die Patenterteilung: **06.06.2007**
(21) Anmeldenummer: 05002899.2
(22) Anmeldetag: 11.02.2005
(51) Int. Cl.: A01C 7/10

(54) **Vorrichtung zum optischen Zählen kleiner Körperchen**
Apparatus for optically counting small objects
Dispositif de comptage optique de corps minuscules

(30) Priorität: 19.02.2004 DE 102004008052
(43) Veröffentlichungstag der Anmeldung: 24.08.2005
(73) Patentinhaber: Amazonen-Werke H. Dreyer GmbH & Co. KG, 49205 Hasbergen (DE)
(72) Erfinder: Scheufler, Bernd, Dr., 49205 Hasbergen (DE); Marquering, Johannes, Dr., 49476 Borgloh (DE)

(56) Entgegenhaltungen:
- GB-A- 1 343 465
- US-A- 4 307 390
- US-A- 4 634 855
- US-A- 5 847 389

## Beschreibung

Die Erfindung betrifft eine Vorrichtung zum Zählen kleiner Körperchen gemäß des Oberbegriffes des Patentanspruches 1.

Eine derartige Vorrichtung ist durch die US-A-43 07 390 bekannt. Bei dieser Vorrichtung zum Zählen kleiner Körperchen sind die Lichtemitter auf der einen Seite und die Lichtdetektoren auf der anderen Seite des Messraumes in übereinander liegenden Ebenen angeordnet.

Derartige Vorrichtungen sind beispielsweise auch in der EP 01 66 136 A2 beschrieben. Bei dieser Vorrichtung sollen Saatkörner, die von dem Dosierorgan einer Sämaschine dosiert werden, gezählt werden. Hierbei sind die aus mehreren Lichtemitter und Lichtdetektoren bestehende Sensoren in einer horizontalen Ebene angebracht. Derartige Sensoren sind in der Lage, relativ normale Körner zu zählen, es bereitet jedoch Schwierigkeiten kleinere Körner, wie beispielsweise Rapskörner zu zählen.

Der Erfindung liegt die Aufgabe zugrunde, mittels einfacher Maßnahmen einen preiswerten, jedoch höher auflösenden Sensor auch zum Zählen kleiner Körner, wie beispielsweise Rapskörner zu schaffen.

Diese Aufgabe wird erfindungsgemäß durch die Merkmale des Kennzeichens des Anspruches 1 gelöst. Infolge dieser Maßnahme wird mit preiswerten Bauteilen, die zwar relativ groß bauen, dennoch eine hohe Auflösung des Sensors zur Erfassung von relativ kleine Körperchen möglich.

Die Lichtemitter und die Lichtdetektoren eines Sensors sind in zumindest zwei benachbarten Ebenen angeordnet, so dass relativ groß bauende Elemente dennoch ein relativ dichtes Strahlengitter der Elemente des Sensors zur Erfassung kleiner Teile möglich machen.

In einer Ausgestaltung der Erfindung sind die Lichtemitter in einer Ebene und die Lichtdetektoren in einer anderen Ebene angeordnet. Auch ist es möglich, dass der einem Lichtemitter jeweils zugeordnete Lichtdetektor in der zum besagten Lichtemitter besagten Ebene angeordnet ist.

Unter benachbarten Ebenen soll im Wesentlichen verstanden werden, dass die Elemente der Sensoren so dicht, wie es ihre Baugröße zulässt, zueinander angeordnet sind.

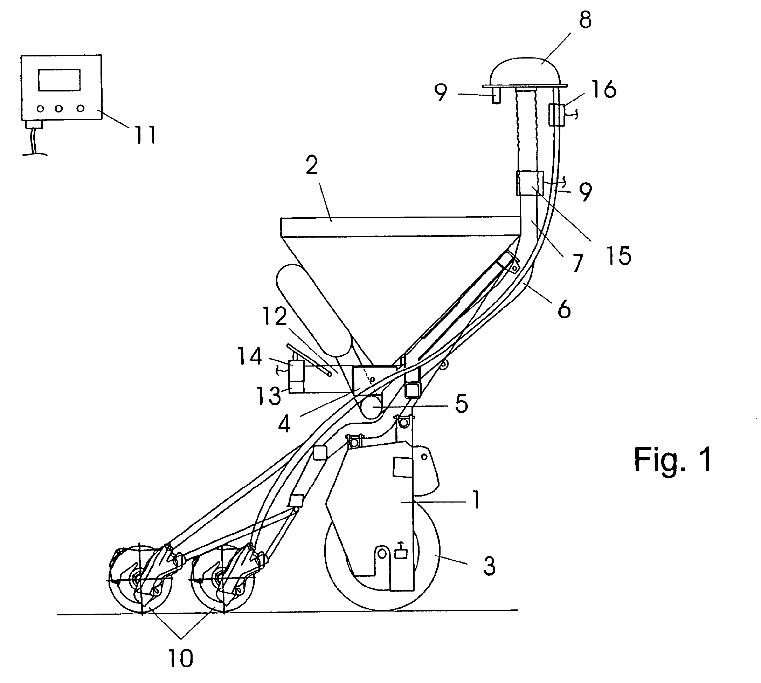

Weitere Einzelheiten der Erfindung sind den übrigen Unteransprüchen, der Beispielsbeschreibung und den Zeichnungen zu entnehmen. Hierbei zeigen
- Fig. 1: die erfindungsgemäß ausgestattete pneumatische Sämaschine in Prinzipdarstellung,

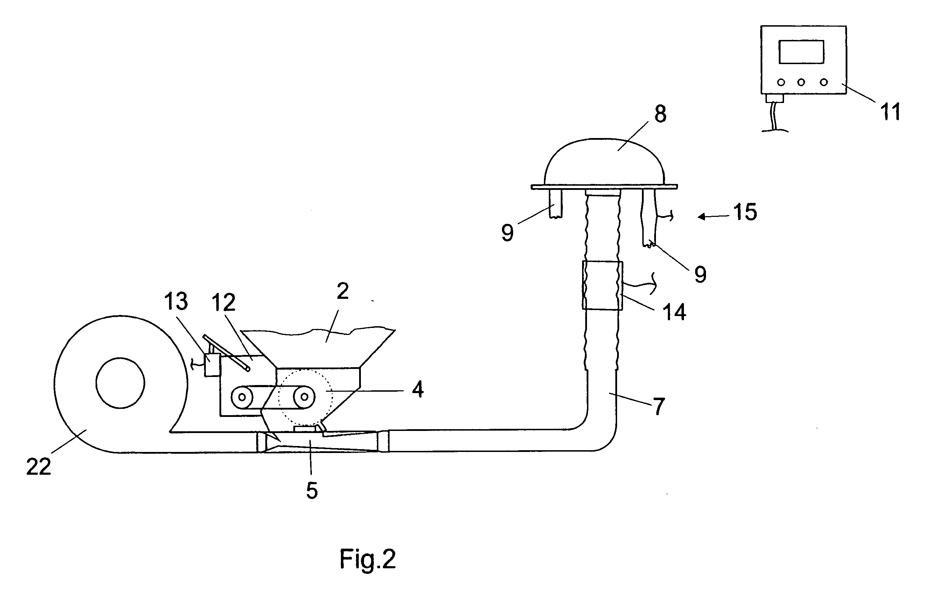

- Fig. 2: die Anordnung der Sensoren in dem Verteilersystem der Sämaschine in vergrößerter Darstellung und in Prinzipdarstellung,
- Fig. 3: die Anordnung der Sensorelemente eines Sensors in der Verteilerleitung im Schnitt und in Prinzipdarstellung,
- Fig. 4: die Anordnung der Lichtemitter des Sensors in der Ansicht IV -IV,
- Fig. 5: die Anordnung der Lichtdetektoren des Sensors nach Fig. 3 nach Fig. 3 in der Ansicht V - V,
- Fig. 6: die Anordnung der Sensorelemente eines weiteren Sensors in der Verteilerleitung im Schnitt und in Prinzipdarstellung,
- Fig. 7: die Anordnung der Sensorelemente des Sensors nach Fig. 6 in der Ansicht VII - VII,
- Fig. 8: die Anordnung der Sensorelemente des Sensors nach Fig. 7 in der Ansicht VIII - VIII,
- Fig. 9: die Anordnung der Sensorelemente eines weiteren Sensors in der Verteilerleitung im Schnitt und in Prinzipdarstellung in einem Teil der Leitung, der rechteckig ausgebildet ist und
- Fig. 10: die Anordnung der Sensorelemente gemäß Fig. 9 in der Ansicht X -X.

Die Sämaschine ist als pneumatische Verteilmaschine ausgebildet. Sie weist einen Rahmen 1 und Vorratsbehälter 2 auf. Der Rahmen 1 stützt sich auf Laufrädern 3 oder einer Bodenwalze auf dem Boden ab. Dem Vorratsbehälter 2 ist ein Zentraldosierer 4 zugeordnet, der das sich im Vorratsbehälter 2 befindliche Saatgut über eine Schleuse 5 in eine zentrale Zuführleitung 6, die als Steigrohr 7 ausgebildet ist, einleitet. Dieses Steigrohr 7 mündet an seinem oberen Ende in einem Verteilerkopf 8, über den das dosierte Saatgut auf die einzelnen sich an dem Verteilerkopf 8 anschließenden Saatleitungen 9 gleichmäßig aufgeteilt wird. Die Saatleitungen 9 führen zu den am Rahmen 1 angelenkten Säscharen 10. Dem Laufrad 3 ist eine nicht dargestellte Wegstreckenmesseinrichtung zugeordnet, die Messdaten an eine als Bordcomputer 11 ausgebildete elektronische Auswerteeinheit übermittelt. Der Dosierer 4 wird über einen Antriebsstrang und ein einstellbares Getriebe 12 von einer Kraftquelle 13 angetrieben. Das Getriebe 12 wird über einen Einstellmotor 14 eingestellt und von dem Bordcomputern 11 angesteuert.

Dem Steigrohr 7 ist ein Sensor 15 zur Ermittlung der insgesamt ausgebrachten Saatkörneranzahl zugeordnet. Des weiteren ist eine Sensoreinheit 16 zumindest einer Saatleitung 9 zugeordnet. Der Sensor 15 und die Sensoreinheit 16 sind über Übertragungsmittel mit dem Bordcomputer 11 verbunden, so dass die Messdaten der Sensoren 15 und 16 an den Bordcomputer 11 übermittelt werden. Die Sensoreinheit 16 weist die Lichtschranken 17 auf. Die Lichtschranken 17 zählen im Bereich des Messraumes 18 die einzelnen von dem Verteilerkopf 8 zu den jeweiligen Säscharen 10 gelangenden Anzahl Saatkörner. Hierbei wird davon ausgegangen, dass über den Verteilerkopf 8 das durch das Steigrohr 7 zum Verteilerkopf 8 gelangende Saatgut gleichmäßig auf die einzelnen Saatleitungen 9 aufgeteilt wird.

Die als Lichtschranken 17 ausgebildeten Sensoren der Sensoreinheit 16 weisen jeweils einen Lichtemitter 19 und einen Lichtdetektor 20 auf und sind kreisförmig verteilt um die Verteilerleitung 9 angeordnet und können so innerhalb der Verteilerleitung 9 die durch den Bereich der Sensoreinheit 16 geförderten Körperchen des Saatgutes zählen. Die Sensoren 17 der Sensoreinheit 16 sind mittels Übertragungsleitung mit der elektronischen Auswerteeinheit 11, bspw. eines Bordcomputers verbunden. Die Körperchen passieren den Messraum 18, wie durch den Pfeil 21 angedeutet. Die Körperchen erzeugen durch das Passieren der Sensoreinheit 16 Messimpulse an den Sensoren 17, die über die Übertragungsleitung an die Auswerteeinheit 11 übermittelt werden. Aufgrund des in dem Speichermedium der Auswerteeinheit 11 hinterlegten Auswerteprogramms werden diese Messsignale ausgewertet und in Anzahl Körner umgesetzt, so dass die dem Messraum 18 passierenden Körperchen gezählt und die ausgebrachte Saatgutmenge mittels des Auswerteprogramms errechnet werden kann.

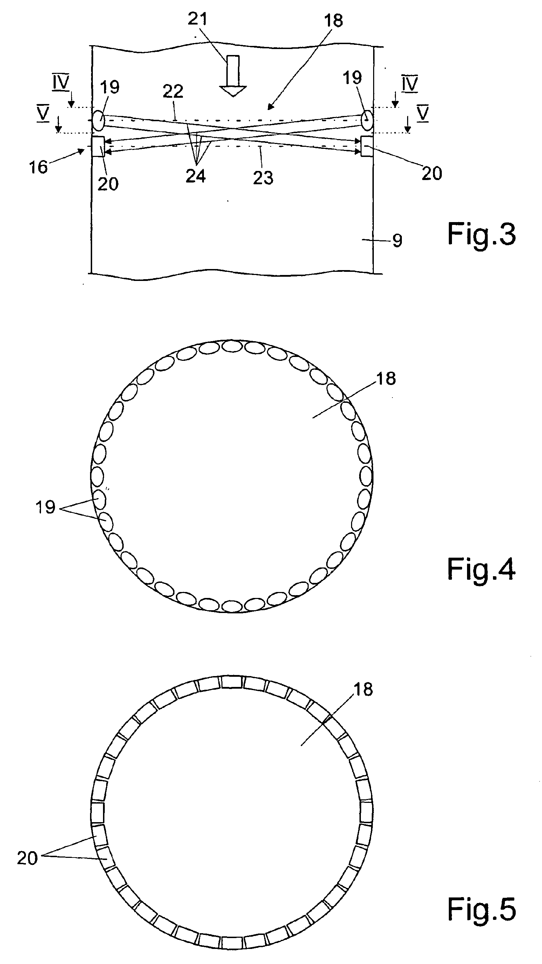

Mehrere Lichtemitter 19 und Lichtdetektoren 20 bilden eine Sensoreinheit 16 . Bei den Ausführungsbeispielen nach Fig. 3 bis 5 sind die Lichtemitter 19 einer Sensoreinheit 16 in der oberen Ebene 22 und die Lichtdetektoren in der unmittelbar benachbarten und darunter liegenden Ebene 22 angeordnet. Somit sind die Lichtemitter 19 in einer Ebene 21 und die Lichtdetektoren 20 in einer anderen Ebene 23 angeordnet, wie die eingezeichnete Strahlengänge 24, die von den Lichtemittern 19 in Richtung der Lichtdetektoren 20 ausgehen zusätzlich verdeutlicht. Entsprechend dieser Strahlengänge sind die Lichtemitter 19 ausgerichtet angeordnet. Jeweils einem Lichtemitter 19 ist entsprechend gegenüberliegend ein Lichtdetektor 20 angeordnet. Somit lässt sich mit relativ großen Bauelementen ein engmaschiges Strahlengitter im Messraum verwirklichen.

In dem Messraum 18 sind die Lichtdetektoren 20 und Lichtemitter 19 der Sensoreinheit 16 angeordnet. Diesen Messraum 18 passieren die zu zählenden Körner und unterbrechen hierbei den entsprechenden Strahlengang 24 zwischen den Lichtemittern 19 und Lichtdetektoren 20. Hierdurch lösen sie einen Impuls aus, der jeweils von dem Bordcomputer 11 entsprechend dem hinterlegten Auswerteprogramm ausgewertet wird.

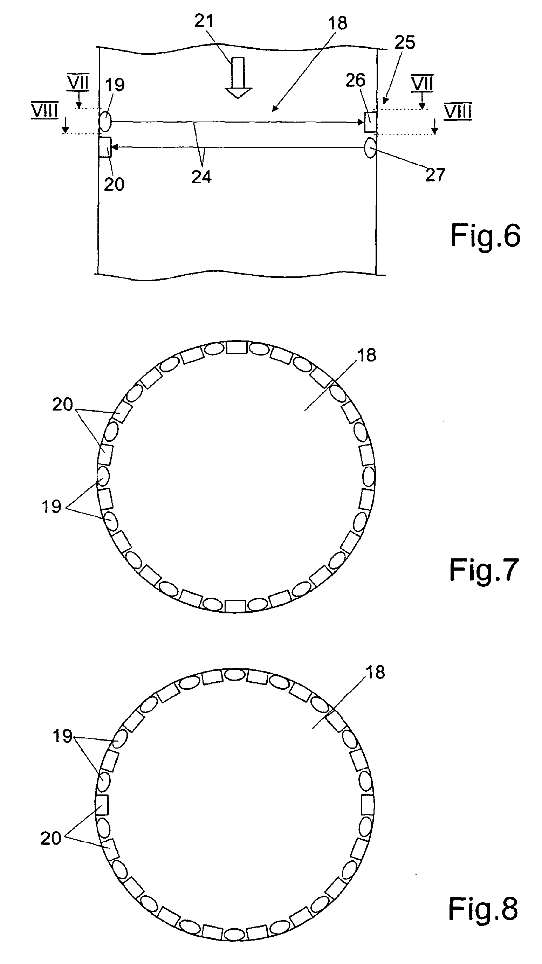

Bei der Sensoreinheit 25 gemäß den Fig. 6 bis 8 sind in jeder Ebene abwechselnd Lichtdetektoren 20 und Lichtemitter 19 gegenüberliegend angeordnet. Es sind zwei Ebenen 26 und 27 entsprechenden Anordnungen von Lichtemittern 19 und Lichtdetektoren 20 vorgesehen. Sowohl die Lichtemitter 19 wie die Lichtdetektoren 20 sind in zumindest zwei unmittelbar benachbarten und übereinanderliegenden Ebenen 25 und 26 angeordnet, wie insbesondere die Fig. 6 zeigt. Der einem Lichtemitter 19 jeweils zugeordnete Lichtdetektor 20 ist in der gleichen Ebene 26 bzw. 27 angeordnet. In Draufsicht gesehen ist jeweils unterhalb eines Lichtemitters 19 ein Lichtdetektor 20 angeordnet, so dass die Anordnungen quasi etwas "zueinander verdreht" angeordnet sind. Auch so lässt sich ein relativ engmaschiges Strahlengitter im Messraum verkleinern.

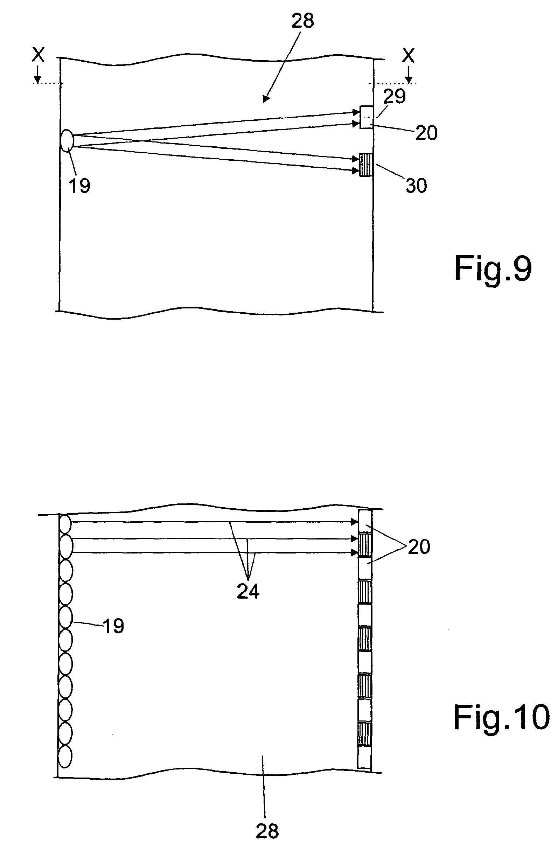

Bei dem Ausführungsbeispiel gemäß den Fig. 9 und 10 weist der Messraum 28 in Draufsicht gesehen einen rechteckigen bzw. quadratischen Querschnitt auf. Auf der einen Seite des Messraums 28 sind die Lichtemitter 19 angeordnet, während auf der anderen Seite des Messraums 28 die Lichtdetektoren 20 angeordnet sind, wobei die Lichtdetektoren 20 in zwei übereinander liegenden Ebenen 29 und 30 angeordnet sind, hierbei die Lichtdetektoren 20 abwechselnd "hoch" und "tief" zueinander angeordnet sind. Durch diese Anordnung ist es möglich, ein relativ dichtes Strahlengitter zu bekommen, welches fein und engmaschig ist, um auch kleine Körperchen genau erfassen zu können.

## Patentansprüche

1. Vorrichtung zum optischen Zählen kleiner Körperchen, insbesondere der von einer Sämaschine auszubringenden Saatkörner, bei denen die zu zählenden Körperchen ein mit Sensoren (17) besetzten Messraum (18) passieren und dabei den Strahlengang zwischen einem Lichtemitter (19) und einem Lichtdetektor (20) der Sensoren (17) unterbrechen, wobei mehreren Lichtemitter (19) und Lichtdetektoren (20) einen Sensor (17) bilden, wobei zumindest die Lichtdetektoren (20) eines Sensors in zumindest zwei, vorzugsweise unmittelbar benachbarten und übereinander liegenden Ebenen (22, 23, 26, 27, 29, 36) angeordnet sind, **dadurch gekennzeichnet, dass** in jeder Ebene (26,27) Lichtemitter (19) und Lichtdetektoren (20) abwechselnd zueinander angeordnet sind, und dass die einander zugeordneten Lichtemitter (19) und Lichtdetektoren (20) in benachbarten Ebenen (26, 27) angeordnet sind.

2. Vorrichtung nach Anspruch 1, **dadurch gekennzeichnet, dass** die Lichtemitter (19) und die Lichtdetektoren (20) eines Sensors in zumindest zwei benachbarten Ebenen (22,23,26,27,29,30) angeordnet sind.

3. Vorrichtung nach einem oder mehreren der vorstehenden Ansprüche, **dadurch gekennzeichnet, dass** die Lichtemitter (19) in einer Ebene (22) und die Lichtdetektoren (20) in einer anderen Ebene (23) angeordnet sind.

4. Vorrichtung nach einem oder mehreren der vorstehenden Ansprüche, **dadurch gekennzeichnet, dass** der einem Lichtemitter (19) jeweils zugeordnete Lichtdetektor (20) in der zum besagten Lichtemitter (19) benachbarten Ebene (22,23) angeordnet ist.

## Claims

1. Apparatus for the optical counting of small bodies, more especially for counting the grains of seed that are to be discharged from a seed drill, where the bodies to be counted pass a measuring chamber (18) that is provided with sensors (17) and, in so doing, interrupt the beam path between a light emitter (19) and a light detector (20) of the sensors (17), wherein a plurality of light emitters(19) and light detectors (20) form a sensor (17), wherein at least the light detectors (20) of a sensor are disposed in at least two planes (22, 23, 26, 27, 29, 36) that are preferably situated directly adjacent and one above the other, **characterised in that** in each plane (26, 27) light emitters (19) and light detectors (20) are disposed alternately one relative to the other, and **in that** the light emitters (19) and light detectors (20) associated with each other are disposed in adjacent planes (26, 27).

2. Apparatus according to claim 1, **characterised in that** the light emitters (19) and the light detectors (20) of a sensor are disposed in at least two adjacent planes (22, 23, 26, 27, 29, 30).

3. Apparatus according to one or several of the preceding claims, **characterised in that** the light emitters (19) are disposed in one plane (22) and the light detectors (20) are disposed in another plane (23).

4. Apparatus according to one or several of the preceding claims, **characterised in that** the light detector (20) that is associated in each case with a light emitter (19) is disposed in the plane (22, 23) adjacent the said light emitter (19).

## Revendications

1. Dispositif de comptage optique de corps minuscules, notamment de grains de semence distribués par un semoir, les corps à compter traversant un espace de mesure (18) équipé de capteurs (17) et coupant le faisceau entre un photoémetteur (19) et un photo-détecteur (20) des capteurs (17),
plusieurs photoémetteurs (19) et photo-détecteurs (20) constituant un capteur (17),
au moins les photo-détecteurs (20) d'un capteur étant installés dans au moins deux plans (22, 23, 26, 27, 29, 36), de préférence directement voisins et superposés,
**caractérisé en ce que**
dans chaque plan (26, 27), il y a des photoémetteurs (19) et des photo-détecteurs (20) associés en alternance et
les photoémetteurs (19) et photo-détecteurs (20), associés, sont prévus dans des plans voisins (26, 27).

2. Dispositif selon la revendication 1,
**caractérisé en ce que**
les photoémetteurs (19) et les photo-détecteurs (20) d'un capteur sont prévus dans au moins deux plans voisins (22, 23, 26, 27, 29, 30).

3. Dispositif selon l'une ou plusieurs des revendications précédentes,
**caractérisé en ce que**
les photoémetteurs (19) sont prévus dans un plan (22) et les photo-détecteurs (22) dans un autre plan (23).

4. Dispositif selon l'une ou plusieurs des revendications précédentes,
**caractérisé en ce que**
le photo-détecteur (20) associé respectivement à un photoémetteur (19) est prévu dans le plan (22, 23) voisin de ce photoémetteur (19).
